# EUROPEAN PATENT SPECIFICATION

(11) **EP 1 962 999 B1**
(45) Date of publication and mention of the grant of the patent: **09.11.2016**
(21) Application number: 06835114.7
(22) Date of filing: 15.12.2006
(51) Int. Cl.: B01J 13/00

(54) **A METHOD FOR PRODUCING HYDROGEL PARTICLES**
VERFAHREN ZUR HERSTELLUNG VON HYDROGELTEILCHEN
PROCÉDÉ DE FABRICATION DE PARTICULES D'HYDROGEL

(30) Priority: 16.12.2005 JP 2005363557
(43) Date of publication of application: 03.09.2008
(73) Proprietor: Kao Corporation, Chuo-ku Tokyo 103-8210 (JP)
(72) Inventor: MINE, Koji, Wakayama 640-8580 (JP); UENO, Satoshi, Wakayama 640-8580 (JP); MATSUYAMA, Kazuo, Wakayama 640-8580 (JP); KUBO, Hideaki, Wakayama 640-8580 (JP)
(74) Representative: Hoffmann Eitle
(86) International application number: PCT/JP2006/325578
(87) International publication number: WO 2007/069791

(56) References cited:
- EP-A- 1 172 083
- WO-A-00/46337
- WO-A-03/032749
- JP-A- 2002 058 990

## Description

### Field of the Invention

The present invention relates to a production method for hydrogel particles and for a dispersion material prepared using the hydrogel particle.

### Background of the Invention

Hydrogel particles applicable to cosmetics, drugs, quasi drugs, food products, etc., halve been known (see, for example, Japanese Patent No. 3483543).

Japanese Patent No. 3555937 discloses a method for producing such hydrogel particles wherein a dispersion which contains an oil component dispersed in an aqueous component solution of dissolved agar is ejected through an orifice while being vibrated to form droplets, which are then cooled to solidify.

JP-A-2001-97818 discloses preparing an O/W emulsion from the oil phase which is to constitute internal oil droplets and the aqueous phase containing a capsulation agent, dispersing/emulsifying the O/W emulsion in the external oil phase to produce an O/W/O emulsion, and solidifying the aqueous phase for capsulation.

JP-A-H9-302379 discloses producing a microcapsule which has a multi-core structure containing natural carotenoid using a spray cleaning method. Specifically, an O/W emulsified material at a temperature equal to or higher than the gelation temperature is sprayed with the average particle diameter of 50 to 3000 µm into a tower which contains an atmosphere at a temperature equal to or lower than the gelation temperature of the O/W emulsified material. The sprayed particles are cooled to solidify and thereafter collected.

The microcapsule production method described in JP-A-H9-302379 requires a cooler for conditioning the atmosphere inside the tower, into which the O/W emulsified material is sprayed, to a temperature equal to or lower than the gelation temperature of the O/W emulsified material.

EP 1172083 A discloses a process for preparing a hydrogel particle which includes discharging of an oil component-emulsified or dispersed solution prepared by dissolving a non-crosslinked hydrogel in an aqueous solution with vibration from an orifice to form droplets and cooling the droplets to solidify.

WO 03/032749 A1 reveals a method for the preparation of a particular product which includes the steps of forming an aqueous emulsion of active ingredient dispersed in a carrier comprising at least one wall-forming carbohydrate material with from 1 to 30 % of agar agar, homogenizing the emulsion, and spray-drying the emulsion to form the particulate product.

JP 2002 058990 A refers to a method of preparing hydrogel particles which consists of ejecting a dispersion prepared by dispersing oily components into an aqueous component solution dissolved with a non-crosslinked hydrogel from a hole under application of vibration thereto to form liquid drops, then cooling and solidifying the liquid drops.

WO 00/46337 A describes an encapsulation method which involves mixing an ionic gum, active material, emulsifying agent and water to produce an aqueous emulsion and contacting droplets of the emulsion with an aqueous solution of those monovalent or polyvalent metal ions known to form insoluble gels, such as calcium and zinc, e.g. by spraying the emulsion into calcium chloride solution.

EP 1 208 754 A1 describes a particulate material prepared by fluidizing core particles, spraying the emulsified matrix onto the core particles and coating the inner part with the outer part.

### Summary of the Invention

The present invention relates to a hydrogel particle producing method us defined in claim 1.

### Detailed Description of the Invention

According to the present invention, the gelation temperature of the gel source of non-crosslinked hydrogel is equal to or higher than 30°C. Therefore, hydrogel particles can be produced without using a cooler for cooling droplets so long as the atmosphere is maintained at an outside air temperature.

Hydrogel particles produced using such a method can be dispersed in an aqueous medium to prepare a dispersion material. Hereinafter, an embodiment of the present invention is described in detail.

A hydrogel particle producing method of the present invention includes the steps as defined in claim 1.

The term "hydrogen particle(s)" as referred to in this application means one or more particles of hydrogel which contains a continuous phase portion of non-crosslinked hydrogel and a large number of disperse phase portions dispersed in the continuous phase portion. It should be noted that the concept of the "hydrogel particle" does not include a capsule composed of a concentric outer layer (shell) and inner layer (core).

With the hydrogel particle producing method of this embodiment, the gelation temperature of the gel source of non-crosslinked hydrogel is equal to or higher than 30°C. Therefore, hydrogel particles can be produced without using a cooler for cooling the droplets so long as the atmosphere is maintained at an outside air temperature. It should be noted that, as a matter of course, a cooler for cooling the droplets may be used.

With the hydrogel particle producing method of this embodiment, hydrogel particles of small particle diameter and high sphericity, can be produced.

Since the hydrogel particle producing method of this embodiment does not include dispersing hydrogel particles in a dispersion medium, it is not necessary to remove the dispersion medium. The oil component (core material) is not dissolved in the Dispersion medium, so that no loss is caused.

### (Aqueous Component Solution)

The hydrogel particle producing method of this embodiment uses an aqueous component solution (sol) which contains agar as a gel source of non-crosslinked hydrogel dissolved therein, the gelation temperature of the gel source of non-crosslinked hydrogel being equal to or higher than 30°C.

The term "non-crosslinked hydrogel" as referred to in this application means a gel formed from a gel source (aqueous component) and water (solvent), which is a product of gelation caused by the heat-reversibility of sol-gel as is the case with agar used as the gel source.

The gel source which produces non-crosslinked hydrogel at the gelation temperature of 30°C or higher is agar.

In view of the feel of a cosmetic product containing produced hydrogel particles when used, using agar having a jelly strength of 147 kPa (1500 g/cm²) or lower is preferable. More preferably, agar having a jelly strength of 19.6 kPa (200 g/cm²) to 127 kPa (1300 g/cm²) is used. The jelly strength can be determined using the Nikkansuishiki method. Specifically, a 1.5 mass% aqueous solution of the gel source is prepared. The aqueous solution is left untreated for 15 hours at 20°C to obtain a solidified gel product. The gel product is subjected to a load applied by a Nikkansuishiki jelly strength measuring apparatus (manufactured by Kabushiki Kaisha KIYA SEISAKUSHO). The gel strength is represented by the maximum mass (g) per 1 cm² surface area when the gel product endures the load for 20 seconds at 20°C.

The "agar" as referred to in this application means hemicellulose containing galactan formed by a 1,3-bond and 1,4-bond of galactose.

The gelation temperature (solidifying point) of the gel used is 30 to 50°C, and preferably 30 to 45°C. Specifically, the gelation temperature (solidifying point) of the gel refers to a temperature measured as follows. An aqueous solution of about 10 ml in which the gel is dissolved is poured into a middle-size test tube (diameter 1.5 cm x height 16 cm) with a thermometer inserted therein. The test tube is sometimes slanted, and when the surface of the solution in the tube becomes solid so that it does not flow even if slanted, the temperature indicated by the thermometer is the gelation temperature (solidifying point).

The aqueous component solution in which the gel source is dissolved preferably has a gel source concentration of 0.1 to 8.0 mass%, more preferably 0.3 to 7.0 mass%, even more preferably 0.4 to 6.0 mass%, and even more preferably 0.5 to 5.0 mass%. The temperature for dissolving the gel source needs to be maintained at a temperature between the dissolution temperature of the gel source and the boiling point of water.

For agar, the temperature for dissolving the gel source is preferably 75 to 100°C, and more preferably 80 to 100°C. To accelerate the dissolution, the temperature for dissolving the gel source may be increased to 100°C or higher by pressurization.

The aqueous component solution preferably contains an emulsifying agent and/or dispersing agent for dispersing the oil component.

Examples of the emulsifying agent and dispersing agent include polymer emulsifying/dispersing agents, anionic surfactants, cationic surfactants, nonionic surfactants, and amphoteric surfactants.

Examples of the polymer emulsifying/dispersing agent includes synthetic polymer compounds, such as a copolymer of acrylic acid and alkyl methacrylate, a composite of an amphoteric surfactant and a higher fatty acid described in JP-A-H7-100356, water-soluble amphiphilic polymer electrolytes described in JP-A-H8-252447 and JP-A-H9-141079, water-soluble crosslinked amphiphilic polymer electrolytes described in JP-A-H9-141080 and JP-A-H9-141081, acrylic acid copolymer .described in JP-A-H10-53625, polysaccharide derivatives described in Japanese Patent No. 3329689 and JP-A-H10-330401 and JP-A-H11-106401, polyvinyl pyrrolidone, polyvinyl alcohol and a derivative thereof, polyacrylamide, an ethyleneoxide adduct of alkylphenol-formaldehyde condensation product, etc., and naturally-occurring polymers, such as Guar gum, Karaya gum, Tragacanth gum, Arabic gum, Arabinogalactan, casein, etc.

Among the above examples, in view of the reduction in stickiness of a cosmetic product containing produced hydrogel particles when applied on the human skin, a copolymer of acrylic acid and alkyl methacrylate (e.g., PEMULEN manufactured by Nikko Chemicals Co., Ltd.), polyvinyl alcohol (e.g., GOHSENOL manufactured by Nippon Synthetic Chemical Industry Co., Ltd.), and polysaccharide derivatives described in the Gazette of Japanese Patent No. 3329689 are preferably used. In view of improving emulsifiability and dispersibility, a neutralized polymer emulsifying/dispersing agent may be used. Alternatively, potassium hydroxide, sodium hydroxide, or the like, may be added to the aqueous component solution before dispersion of the oil component or to a dispersion obtained after dispersion of the oil component, such that the polymer emulsifying/dispersing agent is neutralized. At this point, the value of pH is preferably 4 to 8, and more preferably 6 to 7.

Examples of the anionic surfactants include sodium lauryl sulfate, sodium stearate, and polyoxyethylene lauryl ether sodium phosphate.

Examples of the cationic surfactants include lauryltrimethylammonium chloride, stearylamine acetate, and stearylamine acid.

In view of leakage prevention of the oil components from produced hydrogel particles, the nonionic surfactant preferably has a HLB value of 10 or less, more preferably 8 or less, even more preferably 5 or less, and even more preferably 3 or less. HLB value can be determined based on a formula described in Techniques of Emulsification and Solubilization published by Kougakutosho Ltd. (1984-5-20), pp. 8-12.

Among such nonionic surfactants, in view of small skin irritation caused by a cosmetic product containing produced hydrogel particles, sorbitan fatty acid ester, polyoxyethylene sorbitan fatty acid ester, and polyoxyethylene sorbitol fatty acid ester are preferably used. More preferably, sorbitan monostearate is used. In view of leakage prevention of the oil components from produced hydrogel particles, the melting point of the nonionic surfactant used is preferably 35°C or higher, more preferably 40 to 90°C, even more preferably 50 to 90°C, and even more preferably 60 to 80°C.

Examples of the amphoteric surfactants include alkyldimethylaminoacetic acid betaine and lecithin.

As the emulsifying agent and/or dispersing agent, one of or a mixture of two or more of the above examples is used. In view of smooth spreadability over the human skin of produced hydrogel particles used in a cosmetic product and in view of good handleability during washing and blending of the hydrogel particles, using one or more surfactants selected from a group consisting of a nonionic surfactant, an anionic surfactant, a cationic surfactant, and an amphoteric surfactant together with a polymer emulsifying/dispersing agent is preferable.

In view of the good feel of a cosmetic product containing produced hydrogel particles when used, in view of the stability of the dispersion, and in view of the leakage prevention of the oil components from the hydrogel particles, the amount of the emulsifying/dispersing agent added is preferably 0.001 to 20 parts by mass, more preferably 0.01 to 5 parts by mass, where the dispersion containing the oil components dispersed in the aqueous component solution is 100 parts by mass.

### (Oil Component)

The hydrogel particle producing method of this embodiment uses an oil component.

The oil component is solid oil and/or liquid oil. Herein, the term "solid oil" as referred to in this application means an oil, component whose melting point is 35°C or higher, and the "liquid oil" means an oil component whose melting point is lower than 35°C.

Examples of the solid oil include solid ceramide, solid sphingolipid, solid paraffin, solid higher alcohol, vaseline, solid silicone, solid perfumes, and other types of solid oils. Among these examples, in view of skin protection with a cosmetic product containing produced hydrogel particles, solid ceramide, solid higher alcohol, vaseline, solid silicone, and solid perfumes are preferably used.

In view of the high dispersion stability and suppression of leakage of the oil component from produced hydrogel particles, a preferable example of the solid ceramide is N-(2-hydroxy-3-hexadeciroxypropyl)-N-2-hydroxyethylhexadecanamid. In the case where solid ceramide is used as the solid oil, in view of improving the skin protectability of a cosmetic product containing produced hydrogel particles, the content of solid ceramide in the hydrogel particle is preferably 7.5 to 60 mass%, and more preferably 9 to 30 mass%.

An example of the solid sphingolipid is phytosphingosine.

Examples of the solid paraffin include paraffin waxes and microcrystalline waxes listed in JIS K 2235, and ceresine.

Examples of the solid higher alcohol include cetyl alcohol, stearyl alcohol, arachidyl alcohol, and behenyl alcohol.

Examples of the solid silicone include alkyl-modified silicone and polymer-silicone-denatured and alkyl-denatured acrylic resin.

Examples of the other types of solid oils include hardened oil and higher fatty acid. Examples of the hardened oil include hardened oil made from coconut oil, palm oil, or tallow. Examples of the higher fatty acid include palmitic acid, behenic acid, and stearic acid.

Examples of the solid perfumes include menthol and cedrol.

Examples of the liquid oil include liquid skin protecting agents, liquid perfumes, and other types of liquid oils. Among these examples, in view of the skin protectability of a cosmetic product containing produced hydrogel particles, a liquid skin protecting agent is preferably used.

The liquid skin protecting agent is a constituent for softening or smoothing the skin for the purpose of preventing surface roughening. Examples of the liquid skin protecting agent include: liquid fats and oils, such as liquid paraffin, liquid ester oil, liquid higher alcohol, liquid squalan, liquid glyceride, and the like; liquid ceramides, such as cetyloxypropyl glyceryl methoxypropyl myristamide, and the like; and liquid sphingolipid, such as 1-(2-hydroxyethylamino)-3-isostearyloxy-2-propanol, and the like.

Examples of the other types of liquid oils include liquid hydrocarbon oils, liquid vegetable oils, liquid fatty acids; liquid fats and oils, such as liquid ethylene glycol di-fatty acid ester (fatty acid having 12 to 36 carbon atoms), liquid dialkyl ether (with 12 to 36 carbon atoms), and the like; and liquid silicones. The other types of liquid oils may be volatile or nonvolatile.

The oil component may include only one of or a mixture of two or more of the above examples of the solid and liquid oils.

In view of suppressing leakage of the oil component from produced hydrogel particles, the melting point of the oil component is preferably 35°C or higher, more preferably 40 to 90°C, even more preferably 45 to 90°C, and even more preferably 50 to 80°C. In view of the same, when the oil component includes a solid oil, the melting point of the solid oil is preferably 40 to 120°C, more preferably 50 to 90°C, and even more preferably 50 to 80°C. The melting point of the oil component can be measured by DSC (Differential Scanning Calorimetry).

In view of suppressing leakage of the oil component from produced hydrogel particles, the oil component is preferably a mixture of solid oil and liquid oil. In this case, in view of suppressing leakage of the oil component from produced hydrogel particles and in view of smooth spreadability over the human skin of a cosmetic product containing produced hydrogel particles, the content of the solid oil in the oil component is preferably 1 to 80 mass%, more preferably 6 to 80 mass%, still more preferably 10 to 70 mass%, and most preferably 19 to 50 mass%. In view of the same, the content of the liquid oil in the oil component is preferably 55 to 99 mass%, more preferably 20 to 94 mass%, even more preferably 30 to 90 mass%, and even more preferably 50 to 81 mass%.

The oil component is not limited to any particular form. For example, the oil component may be a water-in-oil emulsion.

### (Preparation of Dispersion)

The hydrogel particle producing method of this embodiment includes preparing a dispersion by dispersing an oil component in an aqueous component solution.

The method for dispersing an oil component in an aqueous component solution is not limited to any particular method. A known technique with any of various stirrers and dispersers can be used. It should be noted that the dispersion prepared by dispersing an oil component in an aqueous component solution is an oil-in-water-type dispersion wherein the oil phase is dispersed in the aqueous phase.

The mixture ratio (mass ratio) of the aqueous component solution and the oil component is not particularly limited so long as the oil-in-water-type dispersion is maintained, but is 99/1 to 40/60, preferably 92.5/7.5 to 45/55, and more preferably 90/10 to 50/50. In view of the good feel of a cosmetic product containing produced hydrogel particles when used and in view of preventing corruption during production and blending of the hydrogel particles into products, the content of the gel source is preferably 0.1 to 8.0 mass%, more preferably 0.3 to 7.0 mass%, even more preferably 0.4 to 6.0 mass%, and even more preferably 0.5 to 5.0 mass%. The content of the oil component in the dispersion is preferably 1 to 60 mass%, more preferably 7.5 to 55 mass%, and even more preferably 10 to 50 mass%. The temperature of the dispersion needs to be maintained equal to or higher than the gelation temperature such that gelation does not proceed. In the case where the gel source is agar, the temperature of the dispersion is preferably 45 to 100°C, more preferably 50 to 95°C, and even more preferably 60 to 90°C.

In view of smooth spreadability over the human skin of a cosmetic product containing produced hydrogel particles and in view of the improvement in compatibility with the human skin of the oil component, the volume-average particle diameter of the oil component in the dispersion is preferably 200 µm or less, more preferably 100 µm or less, even more preferably 50 µm or less, and even more preferably 20 µm or less. The particle diameter of the oil component can be controlled, for example, by adjusting the mechanical strength or by changing the type or concentration of emulsifying and dispersing agents.

The dispersion may contain, in addition to the above, a colorant, a preservative, or a mixture thereof.

Examples of the colorants include pigments and dyes.

Examples of the pigments include inorganic pigments, such as carbon black, iron red, titanium oxide, etc., and organic pigments, such as tar pigment, etc.

Examples of the dyes include solvent dye, vat dye, and color lake.

Examples of the preservatives include methylparaoxybenzoate, isopropyl methyl phenol, ethanol, phenoxyethanol, dehydroacetic acid, and salts thereof.

The dispersion may contain other components applicable to cosmetics, drugs, and quasi drugs, such as humectants, antiperspirants, antimicrobial agents, bactericides, powders, or a mixture thereof.

These colorants and preservatives may be contained in both the aqueous phase and oil phase of the dispersion or may be contained in any one of these phases. These colorants and preservatives may be added to the aqueous component solution and/or oil component before the oil component is dispersed in the aqueous component solution or may be added to the dispersion after the oil component is dispersed in the aqueous component solution.

### (Spraying of Dispersion)

The hydrogel particle producing method of this embodiment includes spraying a dispersion into an atmosphere such that resultant droplets of the dispersion are cooled to gelate, whereby hydrogel particles are produced. It should be noted that the droplets of the dispersion are formed by the surface or interfacial tension.

The method for spraying the dispersion into the atmosphere is
carried out using
a double-fluid nozzle for spraying the dispersion and air while being mixed together.

The rate of sprayed dispersion for each nozzle is 5 to 50 kg/h, preferably 5 to 40 kg/h, and more preferably 5 to 30 kg/h.

In the case where a mixture of the dispersion and air is sprayed, in view of promoting formation of uniform droplets and suppressing coalescence of particles, the fluid pressure of the mixture when sprayed is 0.01 to 1 MPa, more preferably 0.03 to 0.8 MPa, and even more preferably 0.05 to 0.5 MPa. The flow rate of air is 20 to 200 L/min, and more preferably 30 to 150 L/min.

The atmosphere is not particularly limited but may be, for example, air, nitrogen gas, or the like.

The temperature of the atmosphere only needs to be maintained at an outside air temperature (10 to 30°C).

In view of the appearance and productivity, the volume-average particle diameter of hydrogel particles produced by gelation of droplets is 2 0 to 4 0 0 µm.

The volume-average particle diameter of the hydrogel particles can be measured by a laser diffraction scattering method using a laser diffraction/scattering particle size distribution analyzer.

The shape of the hydrogel particle is not limited to anything particular but is preferably the shape of a body of revolution which is composed of a curved surface. Herein, the "body of revolution which is composed of a curved surface" refers to a three-dimensional body defined by rotating a closed plane formed by a continuous curve and a virtual axis, but does not include a three-dimensional body having a flat surface, such as a triangular pyramid, circular cylinder, etc. In view of a beautiful appearance, the shape of the hydrogel particle is more preferably spherical.

The produced hydrogel particles may be added to an aqueous medium and dispersed by stirring, or the like, to prepare, for example, a slurry dispersion material, which can be used as a master batch. Alternatively, the dispersion may be sprayed over an aqueous medium which is being stirred such that hydrogel particles are directly collected in the aqueous medium, whereby the same dispersion material can be obtained.

Examples of the aqueous medium include pure water and water containing a preservative.

Examples of the preservatives include methylparaoxyfenzoate, alcohols, such as 2-phenoxyethanol, ethanol, isopropanol, etc., and polyhydric alcohols which are sources of improving preservability.

The mixture ratio (mass ratio) of the particles and the aqueous medium is not particularly limited but is, in view of the effective condensation rate for use as a master batch, preferably 100/0 to 30/70, more preferably 95/5 to 40/60, and even more preferably 90/10 to 50/50.

The following examples further describe and demonstrate embodiments of the present invention. The examples are given solely for the purpose of illustration and are not to be construed as limitations of the present invention.

### [EXAMPLES]

### (Hydrogel Particles for Test and Evaluation)

Hereinafter, the composition of hydrogel particles for test and evaluation is described. The composition is also shown in TABLE 1.

### <Example 1> (not according to the invention)

N-(2-hydroxy-3-hexadeciroxypropyl)-N-2-hydroxyethylhexadecanamid (trade name "Sphingolipid E", manufactured by Kao Corporation), dipentaerythritol fatty acid ester, polyglyceryl diisostearate, and methyl polysiloxane (trade name "SILICONE KF-96A (10cp)", manufactured by Shin-Etsu Chemical Co., Ltd.) were mixed in the mass ratio of 10.0:2.5:5.0:5.0, and the mixture was regulated to 80°C, whereby an oil component was prepared.

Polyoxyethylene lauryl ether sodium phosphate (trade name "SPE-104NB", manufactured by Kao Corporation), a copolymer of acrylic acid and alkyl methacrylate (trade name "PEMULEN TR-1", manufactured by Nikko Chemicals Co., Ltd.), methyl parahydroxybenzoate, agar (trade name "AX-200" (jelly strength: 19.6 kPa), manufactured by Ina Food Industry Co., Ltd.), sodium hydroxide, and ion-exchanged water were mixed in the mass ratio of 0.05:0.04:0.30:3.00:0.02:74.09, and the mixture was regulated to 90°C, whereby an aqueous component solution was prepared. The gelation temperature of this aqueous component solution was 44°C.

After the aqueous component solution was cooled to 80°C, the oil component and the aqueous component solution were poured in an anchor-type stirrer set to 80°C such that the mass ratio of oil component/aqueous component solution may be 22.5/77.5, and the total weight may be 20 kg. The contents of the stirrer were stirred to produce a mixture solution of the oil component and the aqueous component solution.

Then, the mixture solution was poured in an emulsifier (T.K. HOMO MIXER MARK II Model 40 manufactured by Tokushu Kika Kogyo Kabushiki Kaisha) set to 80°C. The emulsifier operated at 5500 r/min for 15 minutes to prepare a dispersion. The viscosity of the dispersion was 36 mPa·s.

The dispersion, maintained at 80°C, was sprayed into an atmospheric air at room temperature in a downward vertical direction using a spray nozzle ("K010" manufactured by H. IKEUCHI Co., Ltd.) at the flow rate of 11.0 kg/h and the fluid pressure of 0.4 MPa. Droplets of the dispersion formed by spraying were cooled to solidify into hydrogel particles, which were collected at a position 3.4 m below the spray nozzle. These hydrogel particles are referred to as Example 1.

### <Example 2> (not according to the invention)

Hydrogel particles of Example 2 were prepared in the same way as Example 1 except that a different spray nozzle ("K012" manufactured by H. IKEUCHI Co., Ltd.) was used at the flow rate of 14.2 kg/h and the fluid pressure of 0.6 MPa.

### <Example 3> (not according to the invention)

Hydrogel particles of Example 3 were prepared in the same way as Example 1 except that a different spray nozzle ("K015" manufactured by H. IKEUCHI Co., Ltd.) was used at the flow rate of 11.7 kg/h and the fluid pressure of 0.25 MPa.

### <Example 4>

Hydrogel particles were prepared in the same way as Example 1 except that the dispersion was sprayed into atmospheric air at 15°C in a downward vertical direction using a spray nozzle ("SU18B" manufactured by H. IKEUCHI Co., Ltd.) at the flow rate of 10.0 kg/h and the air pressure of 0.5 MPa, and hydrogel particles were collected at a position 1.35 m below the spray nozzle. The hydrogel particles were mixed with an aqueous medium composed of ion-exchanged water and ethanol (preservative) in the mass ratio of hydrogel particles : ion-exchanged water : ethanol = 70:20:10, and the mixture was stirred to prepare a dispersion material. The dispersion material is referred to as Example 4.

### <Example 5> (not according to the invention)

Hydrogel particles were prepared in the same way as Example 1 except that the aqueous component solution was composed of polyoxyethylene lauryl ether sodium phosphate (trade name "SPE-104NB", manufactured by Kao Corporation), a copolymer of acrylic acid and alkyl methacrylate (trade name "PEMULEN TR-1", manufactured by Nikko Chemicals Co., Ltd.), methyl parahydroxybenzoate, agar (trade name "UP-16" (jelly strength: 58.8 kPa), manufactured by Ina Food Industry Co., Ltd.), sodium hydroxide, and ion-exchanged water in the mass ratio of 0.05:0.04:0.30:1.00:0.02:76.09 (gelation temperature: 35°C), and the dispersion was sprayed using a spray nozzle ("K015" manufactured by H. IKEUCHI Co., Ltd.) at the flow rate of 12.0 kg/h and the fluid pressure of 0.3 MPa. The hydrogel particles were mixed with an aqueous medium composed of ion-exchanged water and ethanol (preservative) in the mass ratio of hydrogel particles : ion-exchanged water: ethanol = 60:30:10, and the mixture was stirred to prepare a dispersion material. The dispersion material is referred to as Example 5. The viscosity of the dispersion was 36 mPa·s.

### <Example 6> (not according to the invention)

Hydrogel particles were prepared in the same way as Example 1 except that the aqueous component solution was composed of polyoxyethylene lauryl ether sodium phosphate (trade name "SPE-104NB", manufactured by Kao Corporation), a copolymer of acrylic acid and alkyl methacrylate (trade name "PEMULEN TR-1", manufactured by Nikko Chemicals Co., Ltd.), methyl parahydroxybenzoate, agar (trade name "AX-200" (jelly strength: 19.6 kPa), manufactured by Ina Food Industry Co., Ltd.), sodium hydroxide, and ion-exchanged water in the mass ratio of 0.05:0.04:0.30:1.50:0.02:75.59 (gelation temperature: 42°C), and the dispersion was sprayed using a spray nozzle ("K010" manufactured by H. IKEUCHI Co., Ltd.) at the flow rate of 10.0 kg/h and the fluid pressure of 0.5 MPa. The hydrogel particles were mixed with an aqueous medium composed of ion-exchanged water and ethanol (preservative) in the mass ratio of hydrogel particles : ion-exchanged water : ethanol = 60:30:10, and the mixture was stirred to prepare a dispersion material. The dispersion material is referred to as Example 6. The viscosity of the dispersion was 25 mPa·s.

### <Comparative Example 1>

The dispersion was sprayed in the same way as Example 1 except that the aqueous component solution was composed of polyoxyethylene lauryl ether sodium phosphate (trade name "SPE-104NB", manufactured by Kao Corporation), a copolymer of acrylic acid and alkyl methacrylate (trade name "PEMULEN TR-1", manufactured by Nikko Chemicals Co., Ltd.), methyl parahydroxybenzoate, gelatin (trade name "AP-100", manufactured by Nitta Gelatin Inc.), sodium hydroxide, and ion-exchanged water in the mass ratio of 0.05:0.04:0:30:1.00:0.02:76.09 (gelation temperature: 21°C), using a spray nozzle ("K010" manufactured by H. IKEUCHI Co., Ltd. at the flow rate of 10.0 kg/h and the fluid pressure of 0.3 MPa. In this case, droplets did not solidify, so that hydrogel particles could not be produced. The viscosity of the dispersion was 30 mPa·s.

### <Comparative Example 2>

The dispersion was sprayed in the same way as Example 1 except that the aqueous component solution was composed of polyoxyethylene lauryl ether sodium phosphate (trade name "SPE-104NB", manufactured by Kao Corporation), a copolymer of acrylic acid and alkyl methacrylate (trade name "PEMULEN TR-1", manufactured by Nikko Chemicals Co., Ltd.), methyl parahydroxybenzoate, gelatin (trade name "AP-100", manufactured by Nitta Gelatin Inc.), sodium hydroxide, and ion-exchanged water in the mass ratio of 0.05:0.04:0.30:5.00:0.02:72.09 (gelation temperature: 23°C), using a spray nozzle ("K010" manufactured by H. IKEUCHI Co., Ltd.) at the flow rate of 10.0 kg/h and the fluid pressure of 0.5 MPa. In this case, droplets did not solidify, so that hydrogel particles could not be produced. The viscosity of the dispersion was 65 mPa·s.

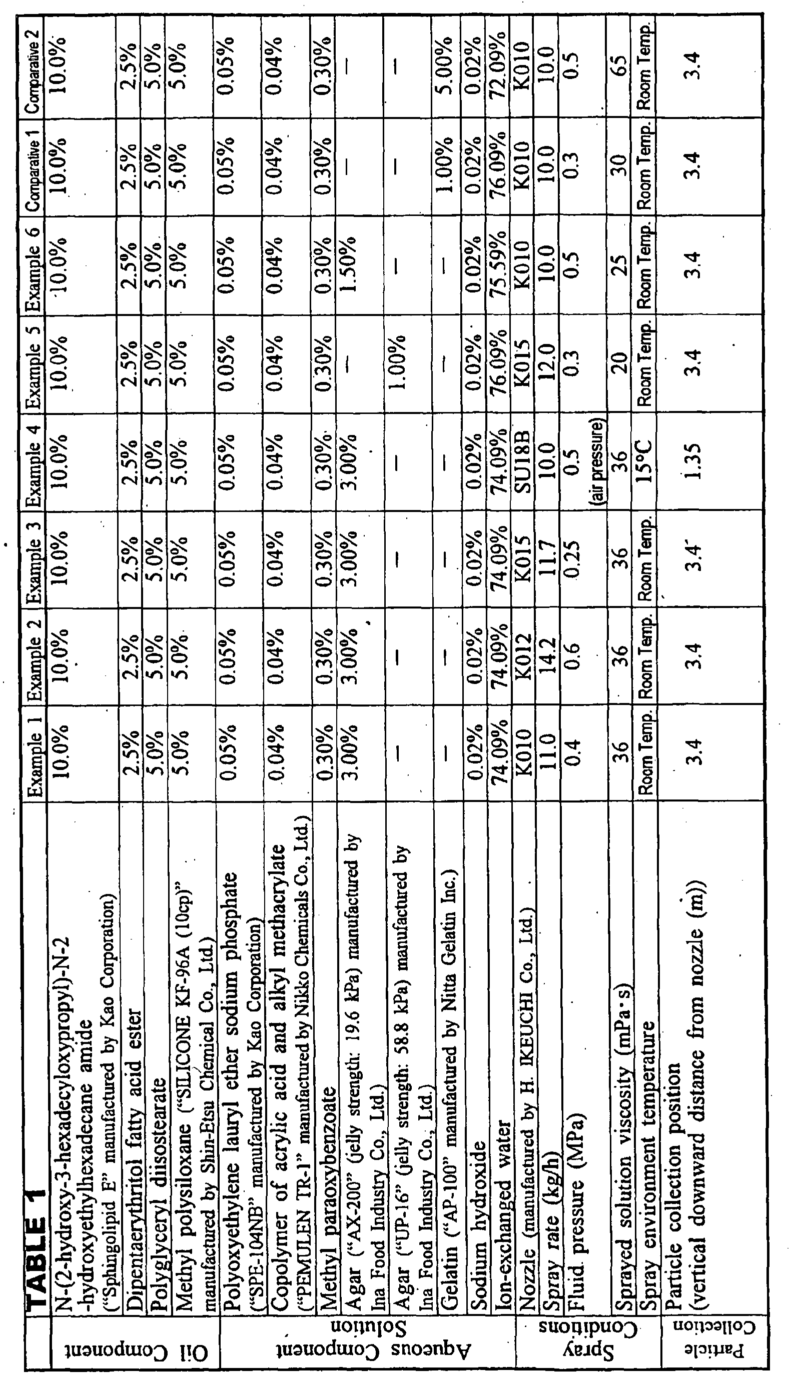

### (Test and Evaluation)

The hydrogel particles of Examples 1 to 3 were each dispersed in an appropriate amount of water, and the average particle diameter and the coefficient of variation (Cv) were measured using a laser diffraction/scattering particle size distribution analyzer (for example, "LA-910" manufactured by HORIBA, Ltd.).

As for each of the dispersion materials of Examples 4 to 6, the average particle diameter and the coefficient of variation (Cv) were measured using a laser diffraction/scattering particle size distribution analyzer (for example, "LA-910" manufactured by HORIBA, Ltd.).

### (Results of Test and Evaluation)

In Examples 1 to 6 where the gel source was agar, the hydrogel particles were successfully produced. In Comparative Examples 1 and 2 where the gel source was gelatin, hydrogel particles were not produced. This is because it is estimated that in Examples 1 to 6 particles were formed even at the outside air temperature, while in Comparative Examples 1 and 2 cooling at the outside air temperature was insufficient for formation of particles.

TABLE 2 shows the measurement results of the average particle diameter and the coefficient of variation (Cv) for Examples 1 to 6.

**TABLE 2**

| | Example 1 | Example 2 | Example 3 | Example 4 | Example 5 | Example 6 | Comparative 1 | Comparative 2 |
|---|---|---|---|---|---|---|---|---|
| Ave. Particle Diameter (µm) | 246 | 133 | 365 | 68 | 327 | 122 | particle formation failed | |
| Cv value (%) | 44 | 48 | 42 | 83 | 54 | 52 | | |

It is seen from TABLE 2 that in Examples 1 to 6 the average particle diameter is very small as compared with conventional hydrogel particles.

The present invention is useful for hydrogel particles and relates to a production method thereof, and of a dispersion material prepared using the hydrogel particles.

## Claims

1. A method for producing hydrogel particles which comprises the step of spraying in an atmosphere maintained at a temperature of 10-30°C a dispersion containing an oil component dispersed in an aqueous component solution which contains, dissolved therein, agar as a gel source of non-crosslinked hydrogel having a gelation temperature of equal to or higher than 30°C, making use of a spray nozzle having a spray orifice and with a rate of sprayed dispersion for the nozzle being 5 to 50 kg/h, such that the formed droplets are cooled to solidify to form hydrogel particles having a volume-average particle diameter of 20 to 400 µm,
the spray nozzle is a double-fluid nozzle for spraying the dispersion and air while being mixed together, and
a flow rate of the air is 20 to 200 L/min, and
wherein the fluid pressure of the mixture when sprayed is 0.01 to 1 MPa.

2. The method of claim 1, wherein the concentration of agar in the aqueous component solution is 0.1 to 8.0 mass. -%.

3. The method of claim 1, wherein the aqueous component solution comprises an emulsifying agent and/or a dispersing agent.

4. The method of claim 3, wherein the aqueous component solution further comprises a polymer emulsifying/dispersing agent.

5. A method for preparing a dispersion material comprising the production of hydrogel particles according to the method of claim 1 and dispersing the same in an aqueous medium.

6. The method of claim 5, wherein the aqueous medium is water containing a preservative.

## Patentansprüche

1. Verfahren zur Herstellung von Hydrogelpartikeln, welches den Schritt umfasst, dass eine Dispersion in eine Atmosphäre, die bei 10 bis 30°C gehalten wird, gesprüht wird, wobei die Dispersion eine Ölkomponente enthält, die in einer wässrigen Komponentenlösung dispergiert ist, die darin gelöstes Agar als Gelquelle für nichtvernetztes Hydrogel mit einer Geltemperatur von gleich oder höher als 30°C enthält, wobei eine Sprühdüse mit einer Sprühöffnung und eine Geschwindigkeit von gesprühter Dispersion für die Düse von 5 bis 50 kg/h angewendet wird, so dass die gebildeten Tropfen gekühlt werden, um sich zu verfestigen, wodurch Hydrogelteilchen mit einem volumengemittelten Teilchendurchmesser von 20 bis 400 µm gebildet werden,
wobei die Sprühdüse eine Doppelfluiddüse zum Sprühen und gleichzeitigen Vermischen der Dispersion und Luft ist und
die Flussgeschwindigkeit der Luft 20 bis 200 1/min ist, und
worin der Fluiddruck der Mischung, wenn sie gesprüht wird, 0,01 bis 1 MPa ist.

2. Verfahren gemäß Anspruch 1, wobei die Konzentration an Agar in der wässrigen Komponentenlösung 0,1 bis 8,0 Masse-% ist.

3. Verfahren gemäß Anspruch 1, worin die wässrige Komponentenlösung einen Emulgator und/oder ein Dispergiermittel umfasst.

4. Verfahren gemäß Anspruch 3, worin die wässrige Komponentenlösung ferner ein Polymeremulgator/-dispergiermittel umfasst.

5. Verfahren zur Herstellung eines Dispersionsmaterials, umfassend die Herstellung von Hydrogelpartikeln gemäß dem Verfahren von Anspruch 1 und Dispergieren desselben in einem wässrigen Medium.

6. Verfahren gemäß Anspruch 5, worin das wässrige Medium Wasser ist, das ein Konservierungsmittel enthält.

## Revendications

1. Procédé de production de particules d'hydrogel qui comprend l'étape de pulvérisation dans une atmosphère maintenue à une température de 10 à 30 °C d'une dispersion contenant un composant huileux dispersé dans une solution de composant aqueux qui contient, dissous en son sein, de l'agar comme source de gel d'hydrogel non réticulé ayant une température de gélification égale ou supérieure à 30 °C, à l'aide d'une buse de pulvérisation ayant un orifice de pulvérisation et avec un taux de dispersion pulvérisée pour la buse étant de 5 à 50 kg/h, de sorte que les gouttelettes formées sont refroidies pour se solidifier pour former des particules d'hydrogel ayant un diamètre de particules moyen en volume de 20 à 400 µm,
la buse de pulvérisation est une buse à deux fluides pour pulvériser la dispersion et de l'air tout en étant mélangés ensemble, et
un débit de l'air est de 20 à 200 L/min, et
dans lequel la pression de fluide du mélange lorsque pulvérisé est 0,01 à 1 MPa.

2. Procédé selon la revendication 1, dans lequel la concentration d'agar dans la solution de composant aqueux est 0,1 à 8,0% en masse.

3. Procédé selon la revendication 1, dans lequel la solution de composant aqueux comprend un agent émulsifiant et/ou un agent dispersant.

4. Procédé selon la revendication 3, dans lequel la solution de composant aqueux comprend de plus un agent émulsifiant/dispersant de polymère.

5. Procédé de préparation d'un matériau de dispersion comprenant la production de particules d'hydrogel selon le procédé de la revendication 1 et la dispersion de celles-ci dans un milieu aqueux.

6. Procédé selon la revendication 5, dans lequel le milieu aqueux est de l'eau contenant un conservateur.
